# EUROPEAN PATENT APPLICATION

(11) **EP 1 879 026 A1**
(43) Date of publication of application: **16.01.2008**
(21) Application number: 06013066.3
(22) Date of filing: 24.06.2006
(51) Int. Cl.: G01N 30/46

(54) **Focussing a sample on an analytical column**

(71) Applicant: Agilent Technologies, Inc., Santa Clara, CA 95051 (US)
(72) Inventor: Glatz, Bernd, 71292 Friolzheim (DE); Kraiczek, Karsten, 76337 Waldbronn (DE)
(74) Representative: Barth, Daniel Mathias

(57) **Abstract**

A focusing unit (130) for a fluidic system (100) adapted for processing a mobile phase containing a fluidic sample, the fluidic system (100) comprising a first processing element (101) and a second processing element (120) each for interacting with the mobile phase, wherein the mobile phase is to be conducted through the first and second processing elements (101, 120), wherein the focusing unit (130) is adapted for being coupled to an inlet (134) of the second processing element (120) and is adapted for modifying an elution strength of the mobile phase in order to spatially focus at least a portion of the fluidic sample in a region close to the inlet (134) of the second processing element (120).

## Description

### BACKGROUND ART

The present invention relates to a fluidic device.

In liquid chromatography, a fluidic analyte may be pumped through a column comprising a material which is capable of separating different components of the fluidic analyte. Such a material, so-called beads which may comprise silica gel, may be filled into a column tube which may be connected to other elements (like a control unit, containers including sample and/or buffers) using fitting elements.

More precisely, the fluidic analyte may first be pumped through a first column (which may be denoted as a pre-column) and may then be pumped through a second column (which may be denoted as an analytical column). Difficulties may occur when coordinating the function of the pre-column and the function of the analytical column.

US 5,908,552 discloses a column for capillary chromatographic separations, for example high performance liquid chromatography, including a column bed of packing material arranged in the inner bore of a column.

US 2004/0156753 A1 by the same applicant Agilent Technologies discloses a PAEK-based microfluidic device comprising two separate substrates which are bonded together to form channels where gases or liquids may move to accomplish applications of the microfluidic device. Thus, an internal cavity may be formed as a lumen or a channel of the microfluidic device.

EP 1,520,837 A1 by the same applicant Agilent Technologies discloses a component part of a microfluidic valve adapted to be coupled with a microfluidic device, the microfluidic device having at least one port coupled to a flow path of the microfluidic device, the component part comprising a first revolving valve element having a first interface with the microfluidic device and a second revolving valve element having a second interface with the microfluidic device and being located within a through hole of the first revolving valve element.

The patent application WO/EP05/050912 by the same applicant Agilent Technologies discloses a column with an additional fluid introduction in the column.

### DISCLOSURE

It is an object of the invention to operate a fluidic device in an efficient manner. The object is solved by the independent claims. Further embodiments are shown by the dependent claims.

According to an exemplary embodiment of the present invention, a (sample) focusing unit is provided for a fluidic system (for instance for a liquid chromatography chip) adapted for processing a mobile phase (for instance a liquid analyte to be conducted through the system) containing a fluidic sample (for instance a fraction of specific molecules of the liquid analyte to be separated from the rest of the liquid analyte), the fluidic system comprising a first processing element (for instance a trap column or pre-column of a two-stage chromatographic separation system) and a second processing element (for instance a main column or analytical column of a two-stage chromatographic separation system located downstream of the trap column or pre-column) each for interacting (for instance for selectively trapping components of the mobile phase) with the mobile phase, wherein the mobile phase is to be conducted through the first and second processing elements, wherein the focusing unit is adapted for being coupled to an inlet of the second processing element and is adapted for modifying an elution strength (particularly for modifying a concentration of ingredients) of the mobile phase (for instance for diluting the mobile phase) in order to spatially focus at least a portion of the fluidic sample (trapped) in a region close to the inlet of the second processing element.

According to another exemplary embodiment, a fluidic device is provided which is adapted for processing a mobile phase containing a fluidic sample, the fluidic device comprising a first processing element for interacting with the mobile phase, wherein the mobile phase is to be conducted through the first processing element, a second processing element for interacting with the mobile phase, wherein the mobile phase is to be conducted through the second processing element, and a focusing unit having the above mentioned features, adapted for being coupled to an inlet of the second processing element and adapted for modifying an elution strength (particularly for modifying a composition) of the mobile phase in order to spatially focus at least a portion of the fluidic sample in a region close to the inlet of the second processing element.

According to still another exemplary embodiment, a method of processing a mobile phase containing a fluidic sample is provided, the method comprising conducting the mobile phase through a first processing element and through a second processing element for interacting of the first processing element and of the second processing element with the mobile phase, and modifying an elution strength (particularly modifying a composition) of the mobile phase (for instance at a position downstream of an outlet of the first processing element and upstream of an inlet of the second processing element, that is at a position between the two processing elements) in order to spatially focus at least a portion of the fluidic sample in a region close to the inlet of the second processing element.

The term "elution strength" may particularly denote a strength or a capability of an agent with which strength a trapped sample may be eluted from a separation column or any other fluid processing element. "Eluting" may denote washing out with a solvent, as in chromatography.

According to an exemplary embodiment, a concentration manipulating entity may be provided in a fluidic system like a liquid chromatography apparatus in which, in a portion between an outlet of a first chromatographic column as a first processing element and an inlet of a second chromatographic column as a second processing element, a fluidic sample which has already been pre-separated in the first processing element is diluted before entering the second (for instance larger) processing element. By such a dilution, for instance by an additional supply of a solvent like water, after pre-separating on the first column and before post-separating on the second column, the fluid separation performance of the entire system may be significantly improved, since after elution of the sample trapped on the first column, trapping this sample or fraction on the second column may be made more efficiently by adjusting the elution strength between the two columns. In other words, the performance of the entire fluid separation system may be improved when the sample trapped in a stationary phase (for instance fluid separation material like beads comprising silica gel) of the first processing element and thereafter released from the first processing element is reduced in elution strength before entering an inlet of the second processing element. The mobile phase of less elution strength comprising a mixture of the solvent and the fluidic sample or fraction may then be trapped on a stationary phase (for instance fluid separation material like beads comprising silica gel) on the second processing element again in a manner to form a narrow spatial band in the second processing element. Consequently, the sample may be separated from other components of the mobile phase.

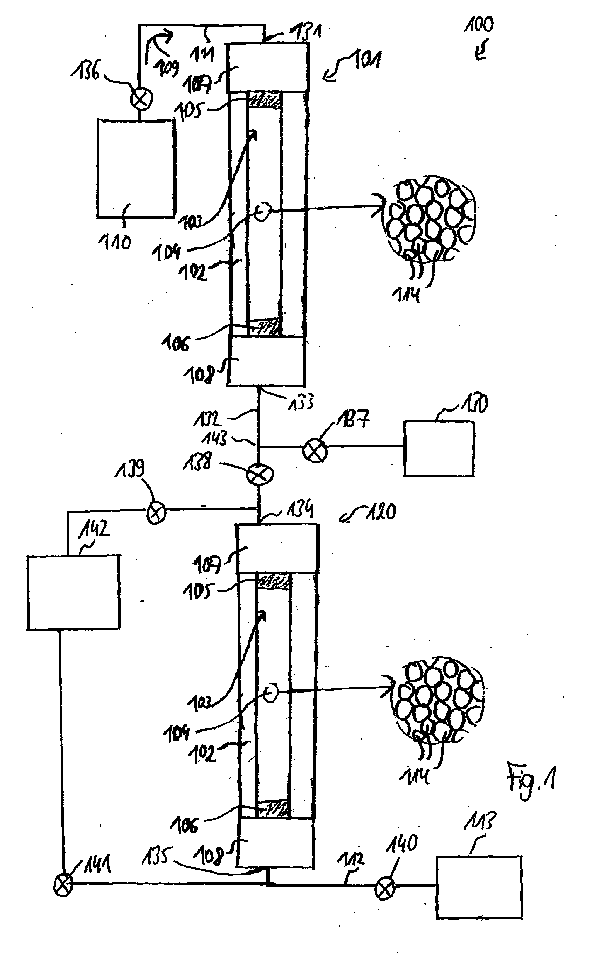

Therefore, exemplary embodiments of the invention may be implemented using a (for instance plastic) fluidic chip, that is to say may be implemented on a multilayer chip having channels as a column substitution. In such a chip, a dynamical refocusing of a fluidic sample included in a mobile phase of such a fluid separation system may be obtained by diluting the sample between a trap column which may also be denoted as a pre-column and an analytical column which is provided downstream the trap column. In such a system, it is in many cases necessary to deal with a limited amount of sample which is provided as a mobile phase to the pre-column (first processing element). When such a sample is inserted in a fluidic device and supplied to an inlet of the trap column, the mobile phase including usually a plurality of different fractions or components is pumped through the first processing element (for instance with a volume of 10 µl to 20 µl). In the pre-column or enrichment column, the 20 µl mobile phase can interact with a stationary phase provided within this enrichment column. By this interaction, a majority of the mobile phase does not significantly interact with the stationary phase and flows into a waste container. However, a specific fraction of the mobile phase, which fraction may be denoted as the actual fluidic sample to be analyzed, may be trapped in this first processing element. After this trapping, the fluid communication paths may be altered, for instance by actuating the pre-column or by using a component part in the manner as described in EP 1,520,837 A1 (which is in its entity incorporated by reference into this patent application, particularly with regard to the embodiments shown in Fig.1 to Fig.4B). After having changed the fluid flow characteristics of the system in the described manner, the sample trapped in the pre-column may be released from the pre-column by changing the chemical environment (for instance by modifying the concentration of ACN in an aqueous solution) so that the released sample may be pumped through the second, analytical column where it can be trapped again.

In this second or "main" column, it may conventionally happen that the sample is trapped as a relatively broad band after being released from the pre-column. Exemplary embodiments are based on the surprising recognition that, by reducing the elution strength of the mobile phase containing the sample before inserting the latter into the main column may allow to significantly improve the separation characteristics of the entire system. After being trapped on the main column, the sample may be eluted by again modifying the chemical environment in the main column, for instance by gradually changing the contribution of ACN of a water-ACN mixture.

Exemplary embodiments intend to avoid loss of sample when eluting the trapped fluidic sample on the main column. In order to reduce the described problems with a conventional pre-column/main column system, it might be considered to use a relatively large pre-column. However, this may result in the need that the main column has to handle a sample of a large volume which may be undesired in the light of the resolution in the main column. Since the sample then is contained in a large volume in the main column, performance may be lost. Another possible measure to take in order to avoid loss of sample is to use a material in the pre-column with less trapping capability. However, this may be problematic as well since this may result in restrictions and constraints for designing the main column.

Exemplary embodiments perform a dilution between the pre-column and the main column, to thereby reduce the elution strength of the mobile phase. Taking this measure may result in a focusing of the sample at an inlet of the main column. For instance, 30% ACN may be required for eluting the trapped sample in the pre-column, but only 15% ACN (alternatively methanol or any other chemically appropriate substance) may be sufficient for eluting the sample in the main column. As an alternative to the above example of ACN, it is also possible to elute a trapped sample using supercritical fluids like carbon dioxide. In a pure water environment, the sample may be entirely trapped on one of the columns, since a stationary phase provided in the columns is not significantly influenced by water. In a pure ACN environment, the sample can simply pass through the column without being trapped, since ACN largely covers the surface of the stationary phase (beads). By applying a gradient between a first component having chemical properties similar to H2O and a second component having chemical properties similar to ACN, the different fractions trapped on the column may be released each at a specific ACN concentration. With this principle, different fractions of fluidic samples of the mobile phase may be separated into spatially localized bands. In other words, using the physical and/or chemical interactions between fluidic sample and stationary phase in a special chemical environment, a separation may be obtained. By carrying out a dilution or, more generally, concentration adaptation, of the fluidic sample after having been eluted from the first column and before being trapped on the second column, the performance of the system may be significantly improved.

Thus, an exemplary embodiment may use a pre-column and a main column as well as an element for modifying the mobile phase for focusing the mobile phase on the main column, said element being located between the pre-column and the post-column.

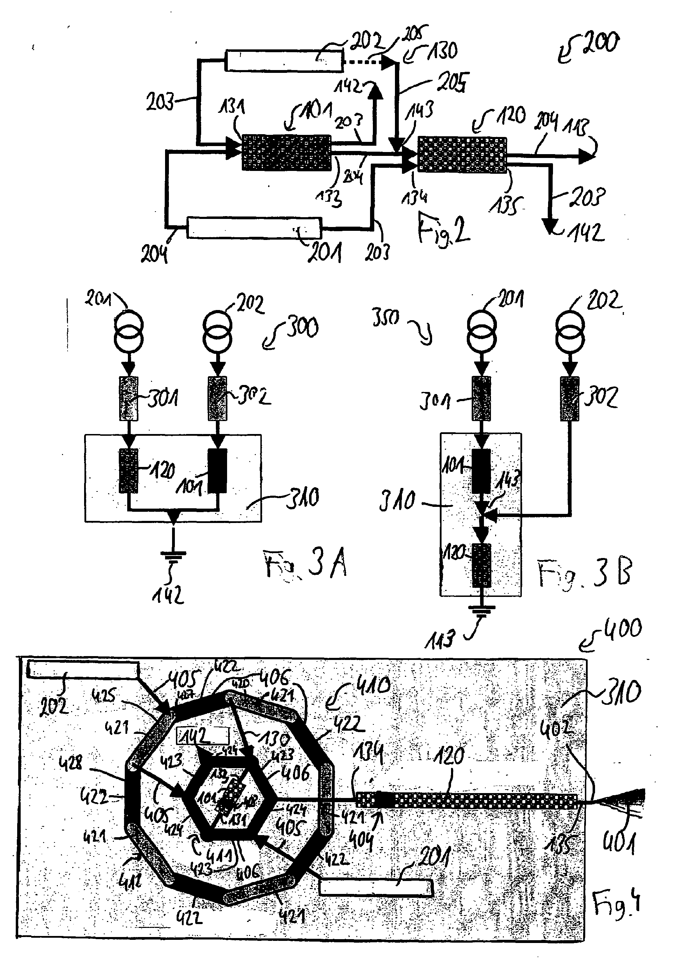

As will be explained in more detail referring to the figures (see particularly Fig.4), the dilution may be switched "on" or "off" using a rotary component as disclosed in EP 1,520,837 A1. This may have the advantage that the system can be used in a conventional way. As an alternative to such a configuration, one additional separate pump may be foreseen for providing a dilution agent, for instance a water contribution, wherein such a dilution may be performed with a bifurcated fluidic branch which may be located closely in front of an inlet of the main column, that is upstream of an entrance of the fluidic sample into the main column.

In a first operation mode of such a system, the mobile phase may be conducted through the pre-column and may be trapped on this pre-column. Portions of the mobile phase which are not trapped on this pre-column may be transported to a waste container. After having trapped the fluidic sample on the pre-column, the main column may be (optionally) reconditioned by rinsing the main column with a suitable solution. Then, the fluid paths of such a system may be reconfigured so that the sample trapped on the pre-column is supplied to the main column, but is - if necessary or desired - diluted additionally and selectively before entering the main column.

Such a procedure may be obtained comfortably using a component as disclosed in EP 1,520,837 A1 having two revolving valve elements which, by simply rotating them, may adjust a desired configuration between fluid conducting features like grooves provided in the revolving valve elements. Each of these grooves may provide two ports of such a component part for a microfluidic valve.

By diluting the sample between pre-column and main column, it may be possible to work with a relatively large pre-column and/or a fluid separation material (stationary phase) having a strong fluid separating impact in the pre-column.

As an alternative to a liquid chromatography system, it is possible to use embodiments in the field of gas chromatography (in which two different gases, like hydrogen and helium may be used) and in which a dilution feature may be incorporated advantageously as well.

Next, further exemplary embodiments of the focusing unit will be explained. However, these embodiments also apply for the fluidic device and for the method of processing a mobile phase containing a fluidic sample.

The focusing unit may be adapted for diluting the mobile phase at a position between an outlet of the first processing element and the inlet of the second processing element. In other words, a position after having left the pre-column and before entering the main column is particularly appropriate for performing the dilution, since this may have a direct impact on the focusing of the entire sample in an entrance portion of the main column.

Particularly, the focusing unit may be adapted for diluting the mobile phase so as to increase a concentration of the fluidic sample. By reducing the sample concentration before entering the main column, dynamic focusing may be promoted, that is to say a spatial compaction of different members of a fraction on the main column.

The focusing unit may be adapted for diluting the mobile phase so as to increase a concentration of a carrier fluid of the mobile phase which carrier fluid differs from the fluidic sample. Therefore, it is possible that a concentration of water or another carrier fluid to be added to the sample coming from the pre-column may be selectively increased. Thus, the focusing unit may be adapted for diluting the mobile phase by supplying a carrier fluid to the mobile phase which carrier fluid differs from the fluidic sample. According to this embodiment, the carrier fluid is selectively added to the fluidic sample. Such a carrier fluid may comprise at least one of the group consisting of water, an aqueous solution, a buffer solution (for instance a Tris buffer or a phosphate buffer), or a supercritical fluid (like carbon dioxide). However, other components to be added are possible as well.

The focusing unit may be adapted for diluting the mobile phase to thereby reduce an elusion force of the fluidic sample in the second processing element compared to the first processing element. By taking this measure, the sample may be focused in an entrance portion of the second column.

However, the focusing unit may also be adapted for concentrating the mobile phase so as to increase a concentration of the fluidic sample before entering the second processing element. In particular scenarios, it may be advantageous to modify the mobile phase in a manner that the actual fluidic sample is concentrated. However, more generally, the concentration of the fluidic sample may be selectively adapted in accordance with requirements of a specific application.

In the following, further exemplary embodiments of the fluidic device will be explained. However, these embodiments also apply to the focusing unit and to the method.

The first processing element may be adapted for retaining the fluidic sample (that is to say to trap selectively a fluidic sample of interest, for instance a special protein of a multi component biological sample) and for allowing other components of the mobile phase to pass the first processing element. This may be achieved due to different chemical properties of different components of the mobile phase, resulting in different ways of interacting between the components of the mobile phase and a stationary phase located fixed in the pre-column. Therefore, a pre-separation may be performed in this first processing element.

The second processing element may be adapted to be supplied with the fluidic sample released from the first processing element and to further separate the fluidic sample from other components of the mobile phase. This may be achieved due to different chemical properties of different components of the mobile phase, resulting in different ways of interacting between the components of the mobile phase and a stationary phase located fixed in the analytical column. Therefore, a two stage fluid separation system may be provided in which, after pre-separating the sample in the first processing element, a further processing in a second processing element may be performed to further increase the separation performance or degree of purity of the separated component.

The fluidic device may comprise a control unit for selectively connecting or disconnecting the focusing unit at a position between an outlet of the first processing element and the inlet of the second processing element. Such a control unit may measure one or more actual parameter in a system, for instance concentrations at one or different positions within the fluidic device, and may then selectively supply (for instance in a time-dependent manner) control signals to selectively switch on or switch off the focusing unit, at selective time intervals. An "automatic" control unit may include sensors provided at appropriate positions of the fluidic device, and may include some processing power to evaluate sensor results. Then, selective control signals may be supplied, for instance to a valve selectively opening or closing a connection between the focusing unit and the fluid path between the two processing elements. Instead of such a "digital" control (distinguishing only between dilution "on" or "off'), it may be also possible that the amount of dilution (for instance the amount of carrier fluid added) can be dosed quantitatively, to thereby increase the accuracy of the control. Additionally or alternatively, the fluidic system may be under the "manual" control of a human user.

The fluidic device may comprise a switchable valve adapted to be operated for switching the fluidic device between different fluid path configurations. Referring to a system as disclosed in EP 1,520,837 A1, switching a component part as disclosed therein in a suitable manner may allow to operate the fluidic device with only two pumps, so that no additional pump may be necessary for supplying dilution fluid of the focusing unit compared to a normal operation of the system as disclosed in EP 1,520,837 A1 (see also Fig.2 to Fig.4 below). In other words, the two pumps usually needed for pumping the mobile phase or a rinse fluid through at least one of the two separation columns in different operation modes may be used as well to operate also the focusing unit, since in the corresponding operation modes, one of these pumps may be temporarily free for pumping dilution fluid of the focusing unit to a position between the two processing units.

The switchable valve may comprise a first revolving valve element having a first fluidic interface with at least one of the group consisting of the first processing element and the second processing element, and a second revolving valve element having a second fluidic interface with at least one of the group consisting of the first processing element and the second processing element and being located within a through hole of the first revolving valve element. By such a configuration, the present pumps may be operated to be used as well for the dilution feature. In this respect, explicit reference is made to the component part disclosed as such in EP 1,520,837 A1 (which is in its entity incorporated by reference into this patent application, particularly with regard to the embodiments shown in Fig.1 to Fig.4B).

The fluidic device may comprise a tip emitting a spray of the separated fluidic sample and coupled to an outlet of the second processing element. For instance, the fluidic device may be a HPLC-Chip/MS Interface for an Agilent lon Trap mass spectrometer. A corresponding HPLC-Chip Cube interface is available within an Agilent 1100 Series LC system. In other words, the fluidic device may be implemented as a plastic microfluidic chip which has a tip at an outlet which tip may be coupled to a mass spectrometer unit for further processing. At such a tip, a microspray may be emitted which may be further analyzed by the mass spectroscopy unit (LC/MS).

The fluidic device may comprise a first pump adapted to be selectively coupled to an inlet of the first processing element or to the inlet of the second processing element. Furthermore, the fluidic device may comprise a second pump adapted to be selectively coupled to an inlet of the first processing element or to a position between an outlet of the first processing element and the inlet of the second processing element. By such a two-pump configuration, with the spatial orientation as described, it may be possible to operate the fluidic device in all necessary operation modes, namely loading a mobile phase on the first processing element, rinsing one or both of the processing elements with a rinsing solution, or eluting the sample from the first processing element onto the second processing element with a selective dilution of the sample in between. Therefore, the pump system may consist of the first pump and the second pump, and may be free of further pumps. However, alternatively, it is possible to use a separate pump for supplying dilution fluid.

The fluidic device may comprise a waste unit adapted to be coupled to at least one of the group consisting of an outlet of the first processing element and an outlet of the second processing element. Such a waste unit may be a container to which components of the mobile phase may be conducted when trapping the fluidic sample on the pre-column. Furthermore, when pumping rinse fluid through one or both of the columns, it may be possible that the corresponding fluid flowing through an outlet of one or both of the columns is collected in such a waste unit.

One of the first processing element and the second processing element may comprise a separation column and the other one of the first processing element and the second processing element may comprise a trap column. The term "separation column" may denote a main column to which a fluidic sample is supplied after being pre-separated by the trap column. Usually, the trap column is significantly smaller than the separation column.

The fluidic device may comprise a chip in which at least a part of the components of the fluidic device are integrated. For instance, the chip may be a multilayer structure, for instance provided in a laminar manner, wherein the different fluidic components may be supplied in channels formed in this chip. Also the first processing and second processing element may be integrated within such a chip. Adding a rotary valve as disclosed, for instance, in EP 1,520,837 A1 to such a chip may allow to operate the chip in a highly flexible manner, with a small number of required pumps or other fluidic equipment. Such a fluidic chip device may be designed on the basis of a HPLC-Chip of Agilent Technologies.

The fluidic device may comprise at least one dilution supply conduit adapted for supplying a fluid for diluting the mobile phase. Such (a) dilution supply conduit(s) may comprise one or more channels formed in a substrate of the fluidic device or may be capillaries. Furthermore, a control unit may be foreseen in such a fluidic device for controlling at least a part of the components of the fluidic device. In such a system, the fluid communication may be selectively adjusted by operating valves, opening or closing connections, etc.

At least a part of the first processing element and at least a part of the second processing element may be filled with a separating material. Such a separating material which may also be denoted as a stationary phase may be any material which allows an adjustable degree of interaction with a sample so as to be capable of separating different components of such a sample. The separating material may be a liquid chromatography column filling material or packing material comprising at least one of the group consisting of polystyrene, zeolite, polyvinylalcohol, polytetrafluorethylene, glass, polymeric powder, silicon dioxide, silica gel and silica gel derivatives. However, any packing material can be used which has material properties allowing an analyte passing through this material to be separated into different components, for instance due to different kinds of interactions or affinities between the packing material and fractions of the analyte.

At least a part of the first processing element and at least a part of the second processing element may be filled with a separating material, wherein the separating material may comprise beads having a size in the range of essentially 1 *µ*m to essentially 50 *µ*m. Thus, these beads may be small particles which may be filled inside the separation columns. The fluidic sample may be passed through the pores, wherein an interaction may occur between the sample and the surface of the separating material. By such effects, separation of the fluid may occur.

At least a part of the first processing element may be filled with a first separating material, and at least a part of the second processing element may be filled with a second separating material being identical with the first separating material. The first processing element and the second processing element may be filled with an identical stationary phase. In other words, the separating material filled in the processing elements may be identical. However, alternatively, it is also possible that the separation materials filled in the two columns differ from one another, allowing to accurately adjust elution strength.

The first processing element may have a size which differs from a size of the second processing element. Particularly, the first processing element (pre-column) may be significantly smaller than the second processing element (main column). This different size may result in a different volume capability and fluid separation properties of the two processing elements, which may be adjusted or adapted to one another by the fluidic sample concentration manipulation feature according to an exemplary embodiment.

At least a part of components of the fluidic device may be integrated in a plastic chip. Therefore, exemplary embodiments may be implemented as well in a chip-like architecture in which an arrangement of multiple layers has integrated therein the components for the fluid processing, or may be provided in a macroscopic liquid chromatography fluid separation system.

The fluidic device may be adapted as a fluid separation system for separating components typically dissolved in a liquid. When a mobile phase including a fluidic sample is pumped through the fluidic device, for instance at high pressure, the interaction between a filling of the column and the fluidic sample may allow for separating different components of the sample, as performed in a liquid chromatography device or in a gel electrophoresis device.

However, the fluidic device may also be adapted as a fluid purification system for purifying the fluidic sample. By spatially separating different fractions of the fluidic sample, a multi-component sample may be purified, for instance a protein solution. When a protein solution has been prepared in a biochemical lab, it may still comprise a plurality of components. If, for instance, only a single protein of this multi-component liquid is of interest, the sample may be forced to pass the columns. Due to the different interaction of the different protein fractions with the filling of the column (for instance using a gel electrophoresis device or a liquid chromatography device), the different samples may be distinguished, and one sample or band of material may be selectively isolated as a purified sample.

The fluidic device may be adapted to analyze at least one physical, chemical and/or biological parameter of at least one component of the mobile phase. The term "physical parameter" may particularly denote a size or a temperature of the fluid. The term "chemical parameter" may particularly denote a concentration of a fraction of the analyte, an affinity parameter, or the like. The term "biological parameter" may particularly denote a concentration of a protein, a gene or the like in a biochemical solution, a biological activity of a component, etc.

The fluidic device may comprise at least one of the group consisting of a sensor device, a test device for testing a device under test or a substance, a device for chemical, biological and/or pharmaceutical analysis, a capillary electrophoresis device, a liquid chromatography device, a gas chromatography device, an electronic measurement device, and a mass spectroscopy device. Particularly, the fluidic device may be a High Performance Liquid device (HPLC) device by which different fractions of an analyte may be separated, examined and analyzed.

The first processing element and the second processing element may be chromatographic columns for separating components of the fluidic sample. Therefore, exemplary embodiments may be particularly implemented in the context of a liquid chromatography apparatus.

The fluidic device may be adapted to conduct a liquid mobile phase through the first processing element and the second processing element. As an alternative to a liquid mobile phase, a gaseous mobile phase or a mobile phase including solid particles may be processed using the fluidic device. Also materials being mixtures of different phases (solid, liquid, gaseous) may be analyzed using exemplary embodiments.

The fluidic device may be adapted to conduct the mobile phase through the first processing element and the second processing element with a high pressure, particularly of at least 100 bar, more particularly of at least 500 bar. In the context of such a high pressure application, the selective modification of the mobile phase properties for improving the performance of the entire system, enabled by a focusing unit, may be particularly of interest.

The fluidic device may be adapted as a microfluidic device. The term "microfluidic device" may particularly denote a fluidic device as described herein which allows to convey fluid through micropores, that is pores having a dimension in the order of magnitude of µm or less.

The fluidic device may also be adapted as a nanofluidic device. The term "nanofluidic device" may particularly denote a fluidic device which allows to convey fluid through nanopores, that is pores having a dimension in order of magnitude of nm or less.

### BRIEF DESCRIPTION OF DRAWINGS

Other objects and many of the attendant advantages of embodiments of the present invention will be readily appreciated and become better understood by reference to the following more detailed description of embodiments in connection with the accompanied drawings. Features that are substantially or functionally equal or similar will be referred to by the same reference signs.

Fig.1 to Fig.4 illustrate fluidic devices according to exemplary embodiments.

The illustration in the drawing is schematically.

In the following, referring to Fig.1, a fluidic device 100 according to an exemplary embodiment will be explained.

The fluidic device 100 is adapted as a system for carrying out liquid chromatography investigations. The fluidic device 100 for separating different components of a fluid or a mobile phase which can be pumped through the apparatus 100 comprises a trap column 101 for pre-separating the fluidic sample and comprises an analytical or main column 120 for post-processing the fluidic sample which has already passed the pre-column 101. In other words, the system 100 is a two-stage fluid separation system in which a dynamic refocusing of a fluidic sample of the liquid phase is obtained using a focusing unit 130.

In the embodiment of Fig.1, each of the fluid separating columns 101, 120 comprises a column tube 102 which is shaped as a hollow cylinder. Within this cylinder, a tubular reception 103 is defined which is filled with a package composition 104.

The fluidic device 100 is adapted as a liquid chromatography device 100 and has, in each of the columns 101, 120, a first frit 105 close to an inlet 107 of the respective columns 101, 120, and a second frit 106 provided at an outlet 108 of the respective column 101, 120. A first fitting element 107 forms the inlet of the respective column 101, 120 and is provided upstream the respective column tube 102. A second fitting element 108 forms the outlet of the respective column 101, 120 and is located downstream of the respective column tube 102. A flowing direction of the fluid which is separated using the fluidic device 100 is denoted with the reference numeral 109.

A fluid separation control unit 110 is provided which pumps fluid under pressure of, for instance, 200 bar through a connection tube 111 and from there to an inlet 131 of the pre-column 101, through the fitting element 107 and the first frit 105 into the column tube 102. After having left the column tube 102, that is to say after having passed the second frit 106 and the second fitting element 108, an intermediate tube 132 connected to an outlet 133 of the pre-column 101 transports the pre-separated analyte to an inlet 134 of the main column 120. The internal construction of the main column 120 is similar to that of the pre-column 101, but may differ from the pre-column 101 with respect to size and fluid separating material 114 filled in the tubular reception 103.

Before the fluidic sample which is already pre-separated by the pre-column 101 flows through the inlet 134 of the main column 120, the fluid separation process is refined by allowing the sample to be diluted by the sample focusing unit 130.

In a further stage, the sample is further separated in the main column 120, and the further separated sample leaves at outlet 135 of the main column 120. After having left the column tube 102 of the main column 120, that is to say after having passed the second frit 106 and the second fitting element 108 of the main column 120, a second tube or pipe 112 transports the separated analyte to a container and analysis unit 113. The container and analysis unit 113 includes cavities or containers for receiving different components of the fluid, and may also fulfill computational functions related to the analysis of the separated component(s).

The column tubes 102 comprise the filling 104. In other words, a packing composition 104 comprising a plurality of silica gel beads 114 is inserted into the hollow bore 103 of the column tube 102 of each of the columns 101, 120.

As can further be taken from Fig.1, a plurality of valves 136 to 141 are provided at various positions of the fluidic device 100. Each of the valves 136 to 141 can be controlled by a control unit (for instance a central control unit, CPU, not shown) so that a desired fluid path may be adjusted in each operation state. For instance, in one operation state a rinse fluid may be conducted through one or both of the columns 101, 120, for instance for conditioning or reconditioning the columns 101, 120 for a subsequent fluid separation procedure. When the valves 136 to 141 are operated in a corresponding manner, such a rinse fluid may be collected in a waste 142 after being conducted through the respective column 101, 120.

As can be taken from Fig.1, a focusing unit 130 is provided. When the mobile phase including the fluidic sample is influenced by the columns 101, 120 which interact with the mobile phase, the mobile phase is conducted through the columns 101, 120. In this context, the focusing unit 130 may be selectively switched to be connected for fluid communication with the fluidic system 100 (by opening or closing a valve 137) and is adapted for selectively modifying a composition of the mobile phase in order to spatially focus at least a portion of the fluidic sample in a region close to the inlet 134 of the main column 120.

In other words, when the pre-separated sample flowing from the outlet 133 of the pre-column 101 to the inlet 134 of the main column 120 flows through the intermediate connection tube 132, and when the valve 137 is opened, the focusing unit 130 may add a further component (for instance water) to the sample which is selectively added to the streaming fluidic sample at a bifurcation point 143 and dilutes the mobile phase. This may result in a decrease of the concentration of the fluidic sample before entering the inlet 134 of the main column 120. Such a decrease of the concentration may be achieved by increasing the concentration of a carrier fluid, namely by providing water by the focusing unit 130. This may have the consequence that the co-ordination or co-function of the columns 101, 120 is adjustable in a refined manner, allowing to focus the fluidic sample in the main column 120 in an improved manner.

In other words, the mobile phase is first conducted through the pre-column 101. By selecting an appropriate ACN concentration in a H₂O environment, a fraction of the fluidic sample may first be trapped at a particular position within the column tube 102 of the pre-column 101. This procedure may be denoted as a pre-focusing or pre-separation. After such a pre-separation in which components of the mobile phase which are not trapped in the pre-column 101 are collected in the waste unit 142, it is possible to recondition the main column 120 for a further separation procedure.

Afterwards, the ACN/ H₂O concentration ratio within the column tube 102 of the pre-column 101 may be selectively modified so as to elute the sample trapped in the column tube 102 of the pre-column 101. Then, the fluidic sample will move through the outlet 133 of the pre-column 101, will be mixed with the water selectively added by the focusing unit 130, and will enter the inlet 134 of the main column 120 to be trapped in a portion close to the outlet of the frit 105 of the main column 120. According to an exemplary embodiment, the fluidic sample is diluted by the selective addition of a carrier fluid like water by the focusing unit 130, so that the focusing characteristics in an inlet portion of the column tube 102 of the main column 120 may be significantly improved.

When the fluidic sample passes through the main column 120, components which differ from a fraction to be separated may simply pass through the column 120 without being trapped and may be collected in a waste 142. At the end of this procedure, a band of the fraction of the fluidic sample of interest is trapped at a particular position within the main column 120. By again modifying the concentration ratio ACN/H₂O, for instance by gradually modifying the respective contributions of these two components, the trapped sample may be released from the main column 120 and may be conducted to the unit 113, for further processing.

Although not shown in Fig.1, a control unit may be provided for selectively connecting or disconnecting the focusing unit 130 at a position between the outlet 133 of the pre-column 101 and the inlet 134 of the post-column 120. This may be achieved by selectively operating the valve 137 to open or close the connection to the focusing unit 130. The valve 137 may also be a metering valve capable of providing a specific amount of dilution agent to the fluidic sample close to the bifurcation point 143.

In the following, referring to **Fig.2,** a fluidic device 200 according to an exemplary embodiment of the invention will be explained. This fluidic device is a HPLC-Chip device (High Performance Liquid Chromatography).

The dynamic focusing HPLC chip 200 again has an enrichment column 101 and an analytical column 120. An analytical pump 201 is provided to pump a fluid through the system 200. Furthermore, a loading pump 202 is provided to pump fluids through the system 200. A connection to a waste is denoted with reference numeral 142. A connection to the evaluation unit 113 is further indicated in Fig.2.

The fluidic device 200 can be operated in different operation modes.

In a sample load/reconditioning mode, the fluid flow within the device 200 is indicated by arrows 203. In this operation mode, the loading pump 202 supplies a mobile phase including a fluidic sample to the inlet 131 of the pre-column 101. This mobile phase is pumped through the pre-column 101, a portion of the mobile phase is trapped in the pre-column 101, and the remaining portion is collected in the waste 142. Furthermore, for (re-)conditioning the analytical column 120, a rinse fluid may be pumped through the analytical column 120 using the analytical pump 201.

Such a sample load operation state 300 is also indicated schematically in **Fig.3A.**

Fig.3A furthermore illustrates a pump resistance 301 and a pump resistance 302 in the corresponding fluid paths. The waste 142 (or a tip) of the microfluidic device 200 which may be connected to a mass spectrometer device (not shown in Fig.3A) is indicated with reference numeral 142.

In a second operation mode, which is indicated in Fig.2 with arrows 204, the sample is further analyzed, and a dynamic focusing feature may be selectively switched on.

In this second operation mode, the analytical pump 201 pumps fluid from the enrichment column 101 to the analytical column 120. In other words, the fluidic sample which is trapped on the enrichment column 101 is eluted by supplying an appropriate mixture of water and ACN, so that at a specific concentration, the trapped sample is released from the enrichment column 101 and is supplied to the analytical column 120. However, as indicated with arrows 205, the loading pump 202 may be switched in such a manner as to provide at the bifurcation point 143 a diluting component (for instance water) for selectively reducing the elution strength of the mobile phase containing the released sample close to the inlet 134 of the analytical column 120. This may be denoted as a dynamical focusing feature.

As can be taken from the various flow resistances 301, 302 shown in Fig.3A and in an illustration 350 of **Fig.3B**, a pressure drop occurs, and the pressure conditions in the system 200 may therefore be brought to an advantageous configuration. Therefore, the embodiment of Fig.2 to Fig.3B is a steady state two-pump configuration with a loading pump 202 being switchable to a dynamic focusing mode.

As can further be taken from Fig.3A and Fig.3B, particularly the columns 101, 120 are provided on a chip (substrate) 310 which will be explained in more detail referring to Fig.4.

**Fig.4** shows a fluidic device 400 which is adapted as a dynamic focusing High Performance Liquid Chromatography chip.

As can be taken from Fig.4, the various components of the system 400 are integrated on and/or in a plastic chip 310. This plastic chip 310 may be a multilayer chip and may include or may be connected to the loading pump 202 and to the analysis pump 201. Furthermore, Fig.4 shows the enrichment column 101 and the analytical column 120. At an outlet 135 of the analytical column 120, a spray 401 may be emitted at a tip 402 when exposed to high voltage of a mass spectrometer unit (not shown in Fig.4) for further analysis. Fig.4 also shows schematically a portion 403 at which a fluidic sample in the mobile phase is trapped on the pre-column 101, and a portion 404 in which the fluidic sample is trapped in a focused manner on the main column 120.

The plastic substrate 310 may have a thickness of 0.3 mm and may have dimensions in length and width of several cm.

In the embodiment of Fig.4, a component part 410 is provided as a rotary system which allows a flexible operation and use of the pumps 201, 202 so that the two pumps 201, 202 may be sufficient for selectively diluting or dynamically focusing the sample between an outlet 133 of the pre-column 101 and an inlet 134 of the main column 120. For details with respect to possible embodiments for the rotary system 410, explicit reference is made to EP 1,520,837 A1.

The rotary system 410 comprises an inner rotor 411 and an outer rotor 412. These rotors 411, 412 may be mechanically actuated or operated so as to adjust a desired fluid path, in accordance with a respective operation mode of the system.

The rotary system 410 is switchable to set between different fluid path configurations. Particularly, the first revolving valve element 411 has fluidic interfaces with the pre-column 101 and with the main column 120, and the second revolving valve 412 has fluidic interfaces with the pre-column 101.

Arrows 405 indicate fluid connections between the pumps 201, 202 and the rotors 410, 411, and fluid connections between the rotors 410, 411. Furthermore, various grooves 406 of the inner and the outer rotors 410, 411 are shown which may be adjusted between the different operation modes.

Of course, the configuration of Fig.4 is only an example for a rotary system and can be replaced by any other groove/port configuration with the rotary elements 410, 411, or by any other fluid communication path switching scheme.

In the following, various operation states of the system 400 will be explained. The various operation states may be selected by correspondingly operating the rotary system 410.

In a sample load operation mode, the sample is loaded via the activated fluid paths 421, 424 (fluid paths 422, 423 are deactivated) from the loading pump 202 through grooves 406 of the outer rotor 410 to a groove 406 of the inner rotor 411, from there to an inlet of the enrichment column 101. In the enrichment column 101, the fluidic sample is trapped as a fraction 403, and the rest of the mobile phase is conducted through an outlet 133 of the enrichment column 101 and a further groove 406 of the inner rotor 411 to the waste 142.

In an analysis without dynamic focusing procedure, fluid paths 421, 423 are activated (fluid paths 422, 424 are deactivated). In this operation mode, it is possible to elute the enriched sample from the enrichment column 101 without dynamic focusing. In such an operation mode, the dynamic focusing channel 130 is a dead end for the analysis pump 201. It is possible to purge groove 425 from sample residues to waste 142.

In a reconditioning analytical column procedure, fluid paths 422, 424 are activated (fluid paths 421, 423 are deactivated). In this operation mode, it is possible to purge a groove 427 and the dynamic focusing channel 130 to waste 142. In this operation mode, the enrichment column 101 is the dead end for the loading pump 202.

However, in an analysis with dynamic focusing operation mode, fluid paths 422,423 are activated (fluid paths 421, 424 are deactivated). In this operation mode, it is possible to elute an enriched sample from the enrichment column 101 onto the analytical column 102. For this purpose, it is possible to increase the elution strength of the mobile phase (see reference numeral 130). In this scenario, the waste 142 is disconnected. It is possible to purge groove 427 and the dynamic focusing channel 130.

It should be noted that the term "comprising" does not exclude other elements or features and the "a" or "an" does not exclude a plurality. Also elements described in association with different embodiments may be combined. It should also be noted that reference signs in the claims shall not be construed as limiting the scope of the claims.

## Claims

1. A focusing unit (130) for a fluidic system (100) adapted for processing a mobile phase containing a fluidic sample, the fluidic system (100) comprising a first processing element (101) and a second processing element (120) each for interacting with the mobile phase, wherein the mobile phase is to be conducted through the first and second processing elements (101, 120),
wherein the focusing unit (130) is adapted for being coupled to an inlet (134) of the second processing element (120) and is adapted for modifying an elution strength of the mobile phase in order to spatially focus at least a portion of the fluidic sample in a region close to the inlet (134) of the second processing element (120).

2. The focusing unit (130) according to claim 1,
wherein the focusing unit (130) is adapted for modifying a concentration of ingredients of the mobile phase for modifying the elution strength.

3. The focusing unit (130) according to claim 1 or any one of the above claims,
adapted for diluting the mobile phase at a position between an outlet (133) of the first processing element (101) and the inlet (134) of the second processing element (120).

4. The focusing unit (130) according to claim 3, comprising at least one of the following features:
the focusing unit (130) is adapted for diluting the mobile phase so as to decrease a concentration of the fluidic sample;
the focusing unit (130) is adapted for diluting the mobile phase so as to increase a concentration of a carrier fluid of the mobile phase which carrier fluid differs from the fluidic sample;
the focusing unit (130) is adapted for diluting the mobile phase by supplying a carrier fluid to the mobile phase which carrier fluid differs from the fluidic sample; the focusing unit (130) is adapted for diluting the mobile phase by supplying a carrier fluid to the mobile phase which carrier fluid differs from a fluidic sample solvent, wherein the carrier fluid comprises at least one of the group consisting of water, an aqueous solution, a buffer solution, a supercritical fluid, and carbon dioxide;
the focusing unit (130) is adapted for diluting the mobile phase to thereby reduce the elution strength of the fluidic sample in the second processing element (120) compared to the first processing element (101).

5. The focusing unit (130) according to claim 1 or any one of the above claims, adapted for concentrating the mobile phase so as to increase a concentration of the fluidic sample.

6. A fluidic device (100) adapted for processing a mobile phase containing a fluidic sample, the fluidic device (100) comprising
a first processing element (101) for interacting with the mobile phase, wherein the mobile phase is to be conducted through the first processing element (101);
a second processing element (120) for interacting with the mobile phase, wherein the mobile phase is to be conducted through the second processing element (120);
a focusing unit (130) according to claim 1 or any one of the above claims adapted for being coupled to an inlet (134) of the second processing element (120) and adapted for modifying an elution strength of the mobile phase in order to spatially focus at least a portion of the fluidic sample in a region close to the inlet (134) of the second processing element (120).

7. The fluidic device (100) according to claim 6,
wherein the focusing unit (130) is adapted for diluting the mobile phase at a position between an outlet (133) of the first processing element (101) and the inlet (134) of the second processing element (120).

8. The fluidic device (100) according to claim 6 or any one of the above claims,
wherein the first processing element (101) is adapted for retaining fluidic sample and for allowing other components of the mobile phase to pass the first processing element (101).

9. The fluidic device (100) according to claim 8,
wherein the second processing element (120) is adapted to be supplied with the fluidic sample released from the first processing element (101) and to further separate the fluidic sample from other components of the mobile phase.

10. The fluidic device (100) according to claim 6 or any one of the above claims,
comprising a control unit (137) for selectively connecting or disconnecting the focusing unit (130) at a position (143) between an outlet (133) of the first processing element (101) and the inlet (134) of the second processing element (120).

11. The fluidic device (100) according to claim 6 or any one of the above claims,
comprising a switchable valve unit (136 to 141) adapted to be operated for switching the fluidic device between different fluid path configurations.

12. The fluidic device (400) according to claim 11, comprising at least one of the following features
the switchable valve unit comprises a first revolving valve element (410) having a first fluidic interface with at least one of the group consisting of the first processing element (101) and the second processing element (120), and a second revolving valve element (411) having a second fluidic interface with at least one of the group consisting of the first processing element (101) and the second processing element (120) and being located within a through hole of the first revolving valve element (410);
the switchable valve unit comprises six ports and is operable between two positions.

13. The fluidic device (100) according to claim 6 or any one of the above claims, comprising at least one of the following features
the fluidic device (400) comprises a tip (402) coupled to an outlet (135) of the second processing element (120) and adapted for emitting a spray comprising the fluidic sample;
the fluidic device (400) comprises a tip (402) coupled to an outlet (135) of the second processing element (120), and the fluidic device (400) comprises a mass spectroscopy unit coupled to the tip (402);
the fluidic device (400) comprises a tip (402) coupled to an outlet (135) of the second processing element (120) and adapted to be coupled to a mass spectroscopy unit;
the fluidic device (200) comprises a first pump (201) adapted to be selectively coupled to an inlet (131) of the first processing element (101) or to the inlet (134) of the second processing element (120);
the fluidic device (200) comprises a second pump (202) adapted to be selectively coupled to an inlet (131) of the first processing element (101) or to a position between an outlet (132) of the first processing element (101) and the inlet (134) of the second processing element (120);
the fluidic device (100) comprises a waste unit (142) adapted to be coupled to at least one of the group consisting of an outlet (133) of the first processing element (101), and an outlet (135) of the second processing element (120);
one of the first processing element (101) and the second processing element (120) comprises an analytical column and the other one of the first processing element (101) and the second processing element (120) comprises a trap column.

14. The fluidic device (400) according to claim 6 or any one of the above claims, comprising
a chip (310) in which at least a part of the components of the fluidic device (400) is integrated;
at least one dilution supply conduit (130) adapted for supplying a fluid for diluting the mobile phase;
a control unit for controlling at least a part of the components of the fluidic device (400).

15. The fluidic device (100) according to claim 6 or any one of the above claims, comprising at least one of the following features:
at least a part of the first processing element (101) and at least a part of the second processing element (120) is filled with a fluid separating material (114);
at least a part of the first processing element (101) and at least a part of the second processing element (120) is filled with a fluid separating material (114), wherein the fluid separating material (114) comprises beads having a size in the range of essentially 1 *µ*m to essentially 50 *µ*m;
at least a part of the first processing element (101) and at least a part of the second processing element (120) is filled with a fluid separating material (114), wherein the fluid separating material (114) comprises beads having pores having a size in the range of essentially 0.02 *µ*m to essentially 0.03 *µ*m;
at least a part of the first processing element (101) is filled with a first fluid separating material (114) and at least a part of the second processing element (120) is filled with a second fluid separating material (114) being identical with the first fluid separating material (114);
the first processing element (101) and the second processing element (120) are filled with an identical stationary phase (114);
the first processing element (101) has a size which differs from a size of the second processing element (120);
the first processing element (101) has a size which is smaller than a size of the second processing element (120);
at least a part of components of the fluidic device (400) is integrated in a plastic chip (310);
the fluidic device (100) is adapted as a fluid separation system for separating the fluidic sample from other compounds of the mobile phase;
the fluidic device (100) is adapted as a fluid purification system for purifying the fluidic sample in the mobile phase;
the fluidic device (100) is adapted to analyze at least one physical, chemical and/or biological parameter of at least one compound of the mobile phase;
the fluidic device (100) comprises at least one of the group consisting of a sensor device, a test device for testing a device under test or a substance, a device for chemical, biological and/or pharmaceutical analysis, a capillary electrophoresis device, a liquid chromatography device, a gas chromatography device, an electronic measurement device, and a mass spectroscopy device;
the first processing element (101) and the second processing element (120) are chromatographic columns (102) for separating components of the fluidic sample;
the fluidic device (100) is adapted to conduct a liquid mobile phase through the first processing element (101) and the second processing element (120);
the fluidic device (100) is adapted to conduct the mobile phase through the first processing element (101) and the second processing element (120) with a high pressure;
the fluidic device (100) is adapted to conduct the mobile phase through the first processing element (101) and the second processing element (120) with a pressure of at least 100 bar, particularly of at least 500 bar;
the fluidic device (100) is adapted as a microfluidic device;
the fluidic device (100) is adapted as a nanofluidic device.

16. A method of processing a mobile phase containing a fluidic sample, the method comprising
conducting the mobile phase through a first processing element (101) and through a second processing element (120) for interacting of the first processing element (101) and of the second processing element (120) with the mobile phase,
modifying an elution strength of the mobile phase downstream of an outlet (133) of the first processing element (101) and upstream of an inlet (134) of the second processing element (120) in order to spatially focus at least a portion of the fluidic sample in a region close to the inlet (134) of the second processing element (120).
